Europäisches Patentamt

European Patent Office

Office européen des brevets

(11) Publication number: 0 224 079
A1

# EUROPEAN PATENT APPLICATION

(21) Application number: 86115208.0

(51) Int. Cl.⁴: **B65G 49/06**

(22) Date of filing: 03.11.86

(30) Priority: 22.11.85 IT 5406785 U

(43) Date of publication of application:
03.06.87 Bulletin 87/23

(84) Designated Contracting States:
AT CH DE ES FR GB LI NL

(71) Applicant: BOTTERO S.p.A.
Roata Canale Via Genova, 82
I-12010 Cuneo(IT)

(72) Inventor: Ghinamo, Leonardo
Via Cuneo, 37
I-12012 Boves(IT)

(74) Representative: Prato, Roberto et al
c/o Ingg. Carlo e Mario Torta Via Viotti 9
I-10121 Torino(IT)

(54) **A conveyor device for flat sheets of glass.**

(57) The device (1) essentially comprises a bed (3) of the "air cushion" type for supporting a sheet (2); a bridge (6) translatable orthogonally of its longitudinal axis above the said bed (3); two arms (17) supported by the bridge (6) and movable between a disengagement position, in which they are raised with respect to the sheet (2), and an engagement position, in which they are able to cooperate with a lateral edge of the sheet (2); and actuator means (33) which control the displacement of the arms (17) between the said engagement and disengagement positions.

Fig.4

Fig.5

EP 0 224 079 A1

# A conveyor device for flat sheets of glass

The present invention relates to a conveyor device for flat sheets of glass, particularly for conveying them from a loading station to an incision or cutting station, and from this latter to a snapping station.

As is known, sheets of glass are conveyed along a system in which incision and snapping is performed, either by means of conveyor belts or by manual manipulation by operators.

Utilising conveyor belts makes the whole system complicated in that the incision station must include a belt frame of retractable type incorporated in a sheet support bed necessary for the phase in which incisions are made. Such a complicated structure is of high cost. Moreover, when the belts raise the incised sheet, the belts themselves may cause an unwanted breakage of the sheet if they are positioned close to the incision. A system of this type which utilises a micro-processor control circuit for controlling the cutter bridge and belt conveyors is known. Although on the one hand this is an advantage in that the system is automatic, on the other hand it is to be noted that this makes the electric automation logic very complex.

In systems in which the incision station comprises an air cushion bed which supports the sheet these are not often conveyed manually by operators. Such a conveying system presents the disadvantage of not being automatice and therefore having a low productive capacity, and the disadvantage of using more personnel which increases the cost of production.

The object of the present invention is that of providing a device for conveying flat sheets of glass which will be free from the above-mentioned disadvantages.

According to the present invention there is provided a device for conveying at least one flat sheet of glass, characterised by the fact that it comprises:
a bed having a plurality of holes upwardly from which flows a pre-determined quantity of air in such a way as to form an "air cushion" able to support the said sheet;
a bridge translatable orthogonally of its longitudinal axis and above the said bed;
thrust means supported by the said bridge and able to assume an engagement position in which its end comes into contact with a lateral edge of the said sheet in such a way that during translation of the said bridge it causes translation of the said sheet also, and a disengagement position in which it is positioned above the said sheet; and actuator means which control the displacement of the said thrust means between the said engagement and disengagement positions.

For a better understanding of the present invention a preferred embodiment is now described, purely by way of non-limitative example, and with reference to the attached drawings, in which:

Figure 1 is a partial and perspective view of a device for conveying flat sheets of glass;

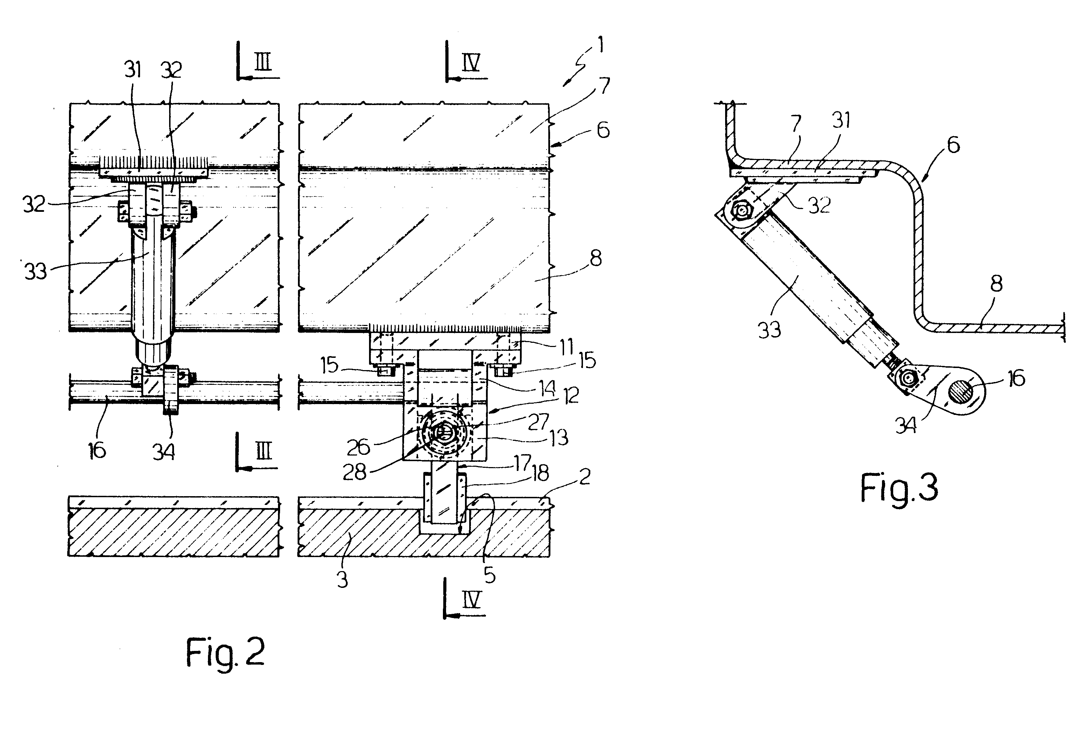

Figure 2 is a side view on an enlarged scale of a portion of the device of Figure 1;

Figures 3 and 4 are respective sections taken on the lines III-III and IV-IV of Figure 2;

Figure 5 is a section taken on the line IV-IV of Figure 2 and with a detail of the device illustrated in a different working position.

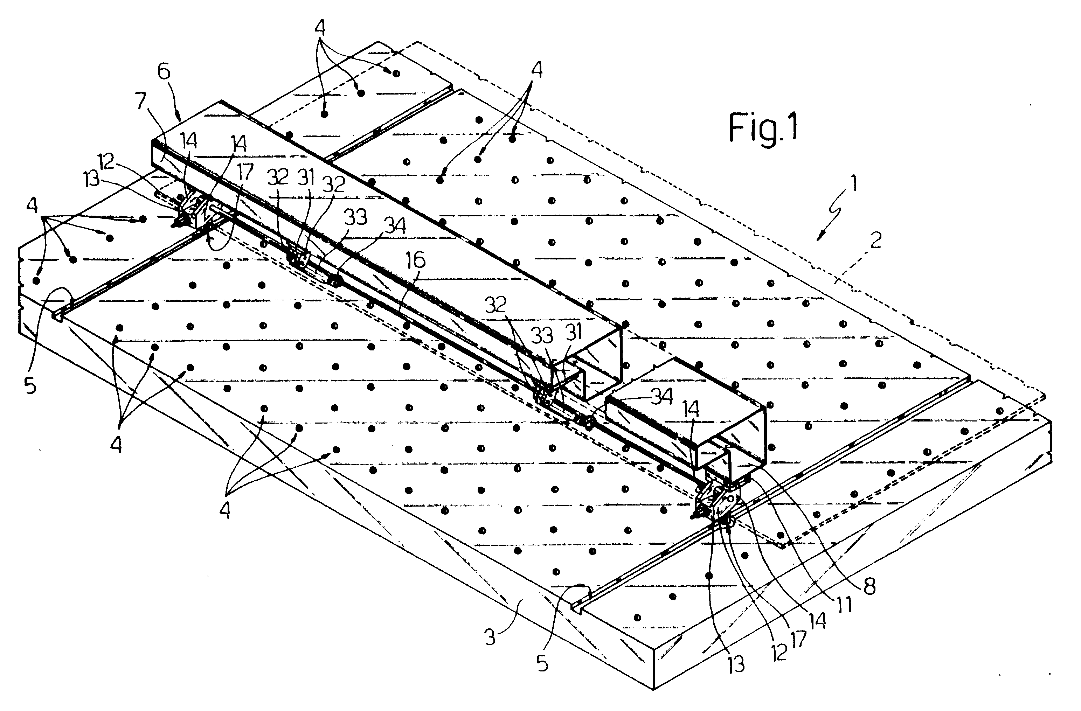

As illustrated in Figure 1, a device for conveying a glass sheet 2 (illustrated in broken outline) is generally indicated with the reference numeral 1. Conveniently, the device 1 forms part of a system provided with a loading station, an incision or cutting station, and a snapping station. In use, therefore, the device has the object of conveying the sheet 2 from one station to the other and consequently can be mounted both upstream and downstream of the incision station.

The device 1 includes a bed 3 having a plurality of holes 4 connected to a compressor (not illustrated) through which there is upwardly expelled a predetermined quantity of air thus defining an "air cushion" which supports the sheet 2. Close to the lateral edges of the bed 3 are formed respective grooves 5 their longitudinal axes lying parallel to the direction of translation of the sheet 2. The device 1 further includes a bridge 6 translatable over the bed 3 orthogonally of its longitudinal axis by means of known type, not illustrated. The bridge 6 is formed by means of an internally hollow shaped section having an inverted L-shape cross-section. In a manner not illustrated the longitudinal ends of the bridge 6 are rigidly connected to two supports slidable along respective guides formed in the lateral edges of the bed 3. It is to be noted that the longitudinal axis of the bridge 6 is parallel to the bed 3 and orthogonal to the direction of translation thereof and therefore of the sheet 2. As already mentioned, the bridge 6 has an inverted L-shape cross-section and therefore has a first portion 7 from which a second portion 8 extends downwardly.

As illustrated in the attached drawings, in correspondence with each groove 5 and on the wall of the portion 8 facing the bed 3 there is fixed, by welding, a respective small plate 11. Each small plate 11 supports a bracket 12 comprising a substantially prismatic body 13 from the lateral walls of which parallel to the axis of the groove 5 extend upwardly a respective tongue 14 having a folded upper end fixed to the plate 11 itself by means of a screw 15. The two brackets 12 support the opposite longitudinal ends of a cylindrical bar 16 rotatable about its longitudinal axis. In particular, each tongue 14 has a through hole in which the bar 16 is housed. On the portion of the bar 16 positioned between two tongues 14 of each bracket 12 there is fitted the upper portion of a thrust arm 17 the lower end of which in the thrust position is within the groove 5. At the lower end of the arm 17 there is formed a rebate engaged by a block 18, which, in use, comes into contact with the lateral edge of the sheet 2. Within the body 13 there is formed a through hole 21 the axis of which is parallel to that of the underlying groove 5. Within the hole 21 there is housed a stop pin 22 having a first end (extending beyond the hole 21 towards the arms 17) which supports a substantially conical block 23. The tip of the block 23 is rounded and can constitute a stop against rotation in the clockwise sense of the arm 17. Between the block 23 and a shoulder 24 formed within the hole 21 there is disposed, about the pin 22, a spring 25 able to absorb the shocks of the pressure which the arm 17 exerts on the block 23. The pin 22 has a second threaded end 26 outside the hole 21 on which there is screwed a nut 27. On this end 26 there is further formed a groove 28 by engaging which, by means of a screwdriver, it is possible to adjust the axial position of the pin 22 along the hole 21.

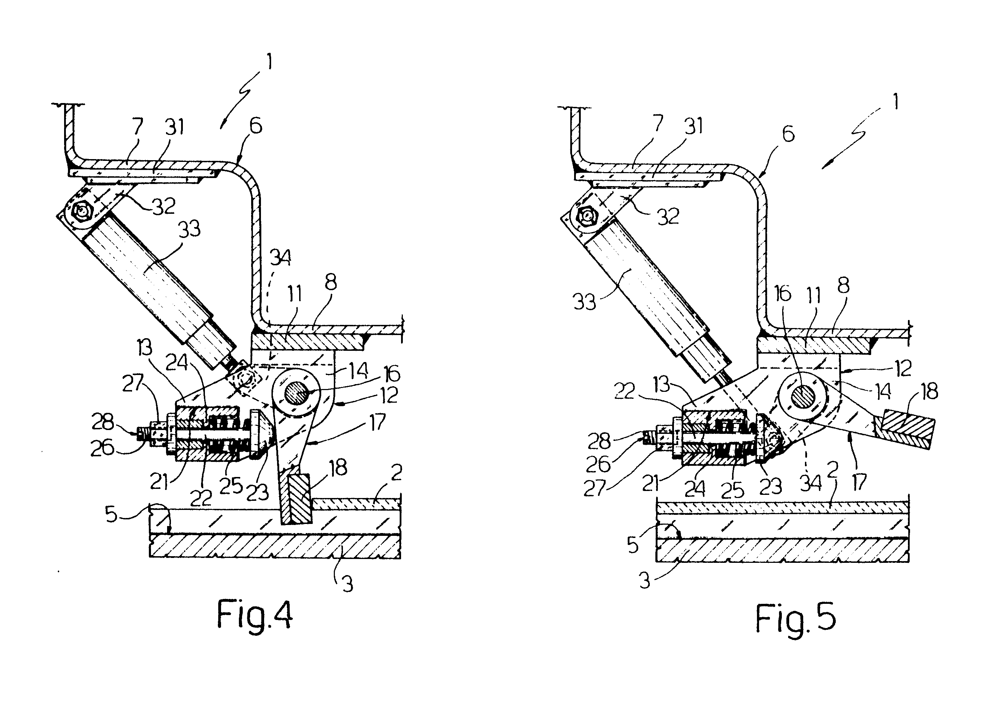

With reference to the attached drawings, on the base wall of the portion 7 of the bridge 6 there are fixed, by welding, two small plates 31 spaced from one another. Each small plate 31 supports two tongues 32 to which is fixed the free end of the fixed part of an actuator 33 (for example a pneumatic actuator) having its longitudinal axis convergent to the bed 3. The free end of the movable part of the actuator 33 is pivoted to one end of a lever 34 on the bar 16. The actuators 33 can assume a first position (illustrated in Figure 4) in which they are entirely retracted, permitting the lower ends of the arms 17 to be housed in the grooves 5, and a second position (illustrated in Figure 5) in which they are entirely extended. In passing from the first to the second position the actuators 33 cause rotation in an anti-clockwise sense of the levers 34 and the bar 16 about the axis of the bar 16 itself. Since the arms 17 are fitted to the bar 16, rotation in an anti-clockwise sense of this latter causes rotation in an anti-clockwise sense also of the arms 17 which are positioned as illustrated in Figure 5, that is with their lower ends no longer in engagement with the respective grooves 5.

From what has been explained above it will easily be understood how the device 1 operates.

In particular, whilst the aircushion supports the sheet 2, the bridge 6, with its two arms 17, draws the sheet 2 by translating parallel to its longitudinal axis. Once the sheet 2 reaches a station, for example the incision station or the snapping station, the lower ends of the arms 17 are withdrawn from the grooves 5 by means of the two actuators 33. The bridge 6 then returns to the starting position to convey another sheet positioned on the bed 3.

The translation of the bridge 6 and the operation of the actuators 33 can be controlled by a micro-processor circuit which at the same time can control the actuation of other devices of the same installation. Conveniently, the blocks 18 are made of a suitable material in such a way as to avoid the possibility that contact between these and the edge of the sheet may cause possible damage to this latter such as, for example, localised chipping. Moreover, the blocks 23 are made of rubber or other such elastic material for the purpose of not subjecting the portion of the arms 17 with which they come into contact to wear.

From a study of the characteristics of the device formed according to the present invention the advantages which it allows to be obtained are evident.

In particular, the device 1 does not require manual manipulation of the sheet 2 and this enables a greater productivity of the system and a lower production cost. Moreover, the device 1 is of simple construction in that there are no conveyor belts therein which, as well as the above-mentioned disadvantages, also complicate the mechanical structure of the devices positioned in the adjacent stations.

Finally, it is clear that the device 1 described and illustrated here can have introduced thereto modifications and variations without by this departing from the present invention. For example, the bed 3 need not be provided with longitudinal grooves, in which case each block 18 and the associated thrust arms 17 would have to be controlled in such a way that the associated free end portions can move between an operative thrust position just above the surface of the bed 5, and a dis-engaged position higher than the upper surface of the sheet 2 positioned on the bed 6 itself.

## Claims

1. A device for conveying at least one flat glass sheet (2), characterised by the fact that it comprises:

a bed (3) having a plurality of holes (14) upwardly from which flows a pre-determined quantity of air in such a way as to form an "air cushion" able to support the said sheet (2);

a bridge (6) translatable orthogonally of its longitudinal axis above the said bed (3);

thrust means (17) supported by the said bridge (6) and able to assume an engagement position, in which one end thereof comes into contact with a lateral edge of the said sheet (2) in such a way that during translation of the said bridge (6) it also causes translation of the said sheet (2), and a disengagement position in which it is located above the said sheet (2); and

actuator means (33) which control displacement of the said thrust means (17) between the said engagement and disengagement positions.

2. A device according to Claim 1, characterised by the fact that the said thrust means (17) comprise two arms (17) pivoted to the said bridge (6).

3. A device according to Claim 2, characterised by the fact that in the said bed (6) there are formed grooves (5) able to house the lower ends of the said arms (17) when these latter assume the said engagement position.

4. A device according to any of the preceding Claims, characterised by the fact that the said actuator means (33) include a bar (16) on which are fitted other portions of the said arms (17) and at least one actuator (33) supported by the said bridge 6 and having a movable part the free end of which is pivoted on a portion of a lever (34) fitted on the said bar (16); the said movable part of the said actuator (33) being able to assume a retracted position, in which the lower ends of the said arms - (17) are housed in the said grooves (5), and an extended position to reach which the said bar (16) turns in an anti-clockwise sense about its axis about which the said arms (17) also rotate in an anti-clockwise sense causing extraction of their lower ends from the said grooves (5).

5. A device according to Claim 3 or Claim 4 when dependent on Claim 3, characterised by the fact that the said grooves (5) are formed close to the opposite lateral edges of the said bed (3); the said arms (17) being fitted to the longitudinal ends of the said bar (16).

6. A device according to Claim 5, characterised by the fact that at the lower ends of the said arms - (17) there is formed a respective rebate able to be engaged by a first block (18) which can come into contact with the edge of the said sheet (2).

7. A device according to Claim 6, characterised by the fact that a respective bracket (12) is fixed to the said bridge (6) in correspondence with the said arms (17), which bracket (12) supports a pin (22) having a first end able to come into contact with the portion of the said arms (17) opposite that supporting the said first block (18); the said pin - (22) being able to constitute a stop against rotation in a clockwise sense of the said arms (17) when this, in use, returns to the said engagement position.

8. A device according to Claim 7, characterised by the fact that the said bracket (12) includes a body (13) in which there is formed a second through hole (21) within which the said pin (22) is housed; this latter having the said first end outside the said second hole (21) and supporting a second block (23) through which it comes into contact with the said arms (17) and a second, opposite, threaded end (26) outside the said second hole (21) and on which is screwed a nut (27).

9. A device according to Claim 8, characterised by the fact that between the said second block - (23) and a shoulder (24) formed within the said second hole (21) there is positioned a spring (25) around the said pin (22).

10. A device according to Claim 8 or Claim 9, characterised by the fact that the said second block (23) is made of resilient material.

11. A device according to any of Claims from 8 to 10, characterised by the fact that the said second block (23) is of conical form with a rounded tip facing towards the said arms (17).

12. A device according to any of Claims from 8 to 11, characterised by the fact that the said bridge (6) is an internally hollow section having an inverted L-shape cross-section; the said bridge (6) having a first portion (7) from which a second portion (8) extends downwardly.

13. A device according to Claim 12, characterised by the fact that the said first portion (7) supports the said actuator means (33) and the said second portion (8) supports the said brackets (12).

Fig.1

0 224 079

Fig.3

Fig.2

Fig.4

Fig.5

European Patent Office

Application number

## DOCUMENTS CONSIDERED TO BE RELEVANT

EP 86115208.0

| Category | Citation of document with indication, where appropriate, of relevant passages | Relevant to claim | CLASSIFICATION OF THE APPLICATION (Int. Cl.4) |
|---|---|---|---|
| A | DE - B2 - 1 924 876 (PILKINGTON BROTHERS LTD.) -- | | B 65 G 49/06 |
| A | DD - A5 - 65 539 (PILKINGTON BROTHERS LTD.) -- | | |
| A | FR - A1 - 2 348 874 (SAINT-GOBAIN INDUSTRIES) ---- | | |

TECHNICAL FIELDS SEARCHED (Int. Cl.4)

B 65 G

The present search report has been drawn up for all claims

| Place of search | Date of completion of the search | Examiner |
|---|---|---|
| VIENNA | 23-02-1987 | PANGRATZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82